# EUROPÄISCHE PATENTSCHRIFT

(11) **EP 2 253 491 B1**
(45) Veröffentlichungstag und Bekanntmachung des Hinweises auf die Patenterteilung: **01.07.2015**
(21) Anmeldenummer: 10155722.1
(22) Anmeldetag: 08.03.2010
(51) Int. Cl.: B60G 11/27, B60G 11/28, B60G 15/12, F16F 9/05, F16F 9/084, B60G 15/14

(54) **Luftfedereinheit mit Lagerrollbalg**
Air suspension with rolling bellow bearing unit
Suspension pneumatique avec appui en forme d'un pli roulant

(30) Priorität: 20.05.2009 DE 102009025847
(43) Veröffentlichungstag der Anmeldung: 24.11.2010
(73) Patentinhaber: Continental Teves AG & Co. OHG, 60488 Frankfurt (DE)
(72) Erfinder: Gleu, Jens-Uwe, 30855, Langenhagen (DE); Behmenburg, Christof, 31867, Lauenau (DE)

(56) Entgegenhaltungen:
- EP-A1- 1 424 506
- EP-A1- 1 837 548
- EP-A2- 2 003 363
- DE-A1- 19 842 733
- DE-A1-102006 052 314
- DE-C1- 19 508 980

## Beschreibung

Die Erfindung betrifft ein Luftfedereinheit zwischen Karosserie und Fahrwerk eines Fahrzeuges, wobei die Luftfedereinheit einen Luftfederrollbalg aufweist, der einerseits an einem Luftfederdeckel und andererseits an einem (und in seiner äußeren Abrollkontur als rotationssymmetrischer Körper ausgebildeten) Abrollkolben befestigt ist, wobei der Luftfederrollbalg , der Luftfederdeckel und der Abrollkolben einen mit Druckluft gefüllten Arbeitsraum umschließen. Die Luftfedereinheit weist auch einem zentrisch angeordneten teleskopierbaren Dämpfer auf, wobei der Dämpfer aus einem als Dämpfergehäuse ausgebildeten Dämpferrohr, einem innenliegenden Dämpfungskolben und einer einerseits am Dämpfungskolben und anderseits am Luftfederdeckel angebundenen Kolbenstange besteht. Der Abrollkolben ist über ein Lager mit dem Dämpferrohr verbunden.

Luftfedereinheiten bzw. Luftfeder- und Dämpfereinheiten dienen heute insbesondere in Personenkraftwagen als besonders komfortable Federungselemente und sorgen für ein angenehmes Fahrgefühl bei einer komfortablen Federung, die ggf. je nach Straßenverhältnissen und Beladung angepasst werden kann.

Es verbleibt jedoch bisher gelegentlich ein dem Fachmann bekanntes so genanntes "Harshness-Problem", d.h. ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Lagerungen, Materialien, Eigendämpfungen, Trägheiten etc. entsteht. Bei Luftfeder- und Dämpfereinheiten ist diese überlagerte Rauhigkeit (Harshness) u.a. abhängig vom anliegenden Arbeitsdruck, mit denen die Rollbälge und die übrigen Materialien beaufschlagt werden und abhängig von den Lagerungen zwischen den einzelnen Bauteilen bzw. zwischen den Bauteilen und der Karosserie. Bei hohem Druck führt der auf die Rollbälge wirkende Druck in den genannten Bereichen zur Verhärtung des Materials und zur Veränderung der inneren Federung / Dämpfung, so dass das Federungsverhalten in den Harshness-Bereichen unangenehmer wird.

Eine Luftfedereinheit, d.h. ein Luftfederbein ist z.B. aus der DE 195 08 980 C1 bekannt. Bei diesem Luftfederbein weist das Gehäuse des Stoßdämpfers, also das Dämpferrohr, einen flanschartigen Kragen auf, an dem der Abrollkolben über einen anvulkanisierten elastischen Ring angebunden ist. Der elastische Ring ermöglicht eine gewisse Taumelbeweglichkeit des Abrollkolbens der Luftfeder zum Gehäuse des Stoßdämpfers und infolgedessen eine Verschwenkbarkeit der Luftfeder gegenüber dem Stoßdämpfer. Eine Verbesserung in Bezug auf das Harshness-Verhalten ist jedoch mit der dort offenbarten Konstruktion nicht darstellbar, auch wenn die Härte des dort als Lagerung vorgesehenen elastischen Ring für die Veränderung der Taumelbeweglichkeit einstellbar ist.

Eine Luftfedereinheit nach dem Oberbegriff des Hauptanspruchs ist aus der EP 1 424 506 A1 bekannt.

Im Stand der Technik sind auch Versuche bekannt, das Komfortproblem bei Luftfeder-Rollbälgen durch Verwendung von besonderen Bälgen zu lösen, die durch ihre Bauweise, die verwendeten Materialien und die Einbaubedingungen (Druckbereich, Rollfaltenbreite) einen möglichst geringen Harshnesseffekt aufweisen. Auch wurde versucht, durch Verwendung von besonders gestalteten Bauteilen (Lager, Unterlegscheiben usw.) im Kraftpfad der Luftfeder, die Einwirkungen von Schwingungen höherer Frequenz und geringer Amplitude zu entkoppeln, die insbesondere bei kleinen Weganregungen überproportional in das Chassis eingetragen werden.

Der Erfindung lag also die Aufgabe zugrunde, den grundlegenden Konflikt zu lösen, der darin besteht, dass Luftfedereinheiten und deren Bauteile, Lagerungen etc. einerseits auf die erforderlichen hohen Tragkräfte (6kN bis 20kN) angepasst werden müssen und andererseits an mindestens einer Stelle in ihrem "Lastpfad" zur Reduzierung der Harshness eine im Vergleich dazu sehr kleine Steifigkeit aufweisen müssen. Weiterhin bestand die Aufgabe darin, für eine die gegensätzlichen Forderungen nach hoher Tragkraft einerseits und gutem Harshness-Verhalten andererseits erfüllende Luftfedereinheit eine möglichst einfache, leicht herstellbare und sichere Konstruktion vorzuschlagen, die dazu den vorgegebenen Bauraumgrößen und Gewichtsanforderungen entspricht.

Gelöst wird diese Aufgabe durch die Merkmale des Hauptanspruchs. Weitere vorteilhafte Ausbildungen sind in den Unteransprüchen offenbart.

Dabei ist das Lager, mit dem der Abrollkolben mit dem Dämpferrohr verbunden ist, als ein mit dem Arbeitsraum in Verbindung stehender, spiegelbildlich zum Luftfederrollbalg angeordneter und mit zum Luftfederrollbalg entgegengesetzter Tragwirkung versehener Lagerrollbalg ausgebildet, dessen Abrollbewegung der Abrollbewegung des Luftfederrollbalges kinematisch entgegengesetzt ist.

Der Lagerrollbalg ist damit durch den Innendruck im Arbeitsraum beaufschlagt. Die erfindungsgemäße Ausbildung der Luftfedereinheit erreicht durch die besondere Formgebung und Einbausituation des Lagerrollbalgs nämlich, dass der in der Luftfeder herrschende Innendruck, der ja proportional zur momentan erforderlichen Tragwirkung ist, genutzt wird, um dem Lagerrollbalg eine hohe Tragwirkung zu verleihen bei gleichzeitig vorhandener geringer Steifigkeit zur Entkopplung der im Hinblick auf das Harshness-Verhalten relevanten Schwingungen. Durch diese dem Lagerrollbalg zugute kommende zusätzliche Tragwirkung durch den Innendruck der Luftfeder kann dessen Auslegung so erfolgen, dass sehr weiche Materialien mit kleinen Steifigkeiten für den Lagerrollbalg verwendet werden. Damit ist die Steifigkeit gegenüber Schwingungen höherer Frequenz und geringer Amplitude sehr klein, obwohl eine sehr große Tragkraft vorhanden ist. Der eingangs beschriebene Konflikt zwischen den gegensätzlichen Anforderungen wird damit gelöst.

Die erfindungsgemäße Ausbildung hat damit den Vorteil, daß sie die denkbar weichste Lagerung des Abrollkolbens gegenüber dem Dämpferrohr mittels einer Membran (Lagerrollbalg ) ist. Die lässt sich auch durch die folgende theoretische Überlegung nachweisen:
Wenn der Lagerrollbalg der erfindungsgemäßen Luftfedereinheit fiktiv keine Bewegung macht, d.h. in einem Gedankenexperiment blockiert wird, dann bleibt die Grundsteifigkeit der Luftfeder und damit deren Tragwirkung und Kennlinie erhalten.
Wenn nun - in Fortführung des Gedankenexperiments - der Dämpfer fiktiv keine Bewegung macht, dann kann sich der Luftfederkolben theoretisch völlig kraftfrei axial auf und ab bewegen. Dieser Bewegung stehen alleine die Hysteresekräfte des Luftfederrollbalgs und des Lagerrollbalgs entgegen. Alle anderen Kräfte sind durch die besondere Anordnung der sich gegenüberliegenden Rollfalten mit gleichem effektivem Durchmesser ausgeglichen. Eine Luftfederkolbenbewegung erzeugt auch keine Volumenänderung der Luftfeder und damit auch keine Druckänderungen. Wenn nun die Bauform des Luftfederrollbalgs und des Lagerrollbalgs vergleichbar sind, dann bauen beide eine Harshness-Steifigkeit in der Größenordnung von ca. 10N/mm auf. Durch ihre serielle Verschaltung werden davon nach außen aber nur 50% wirksam. In der Realität treten natürlich stets beide o.g. fiktiven Bewegungsanteile sich überlagernd gleichzeitig auf.

Eine vorteilhafte Weiterbildung besteht darin, dass der Lagerrollbalg den gleichen wirksamen Durchmesser wie der Luftfederrollbalg aufweist. Der Lagerrollbalg muss somit nur die lokalen Belastungen (Abdichtung, Kräfte aus der Balghysterese) tragen, was die Möglichkeiten einer vorteilhaften, baulichen Ausführung erweitert. Der Lagerrollbalg muss natürlich eine Abdichtung des im Arbeitsraum vorhandenen Luftfederinnendrucks nach außen sicherstellen.

Eine weitere vorteilhafte Weiterbildung besteht darin, dass auf der Innen- oder Außenseite des Lagerrollbalges konturierte Führungen als Abrollzylinder vorgesehen sind. Insbesondere mit der Maßgabe, dass eine sich über den Hub des Lagerrollbalgs veränderliche wirksame Fläche des Lagerrollbalges entsteht, lassen sich die konturierten Führungen vorteilhafterweise so ausbilden, dass bei Relativbewegungen zwischen Abrollkolben und Dämpferrohr eine radiale (vertikale) Zentrierung des Abrollkolbens am Dämpferrohr erfolgt. Zusätzlich kann durch die Konturierung der Abrollflächen/Führungen des Lagerrollbalges eine Konturierung des tragenden Luftfederrollbalges an deren Abrollkolben ausgeglichen werden

Eine weitere vorteilhafte Weiterbildung besteht darin, dass zur axialen Fixierung ein zusätzliches axiales Elastomerlager aus relativ weichem Elastomer oder zelligem Polyurethan zwischen Abrollkolben und Dämpferrohr vorgesehen ist. Das ist insbesondere dadurch vorteilhaft, dass man das Elastomerlager gezielt auf die gewünschte Fahrdynamik abstimmen kann. Das Lager muss dabei nicht dichten. Es kann aber auch zur Abdichtung des Luftfederinnenvolumens gegen die Umgebung verwendet werden.

Eine weitere vorteilhafte Weiterbildung besteht darin, dass das axiale Elastomerlager mit einem solchen Lagerspiel versehen ist, dass erst beim Überschreiten des Spiels infolge großer Relativbewegungen zwischen Abrollkolben und Dämpferrohr eine Lagerwirkung einsetzt. Während bei einer spielfreien Ausführung des Lagers es in der Regel erforderlich ist, dieses Lager sehr weich auszuführen, ist es mit einem gewissen Spiel möglich, ein weniger flexibles Lager einzusetzen. Ein solches Lager hat eine axial zentrierende Wirkung bei größeren Hubbewegungen des Lagerrollbalges, ist aber beim Anfedern des Lagerrollbalges kraftfrei.

Eine weitere vorteilhafte Weiterbildung zur Verringerung des Bauraumes im Sinne einer möglichst kompakten Einrichtung besteht darin, dass der Lagerrollbalg als kurzer und im Wesentlichen seine Rollfalte beinhaltender Rollbalg ausgebildet ist.

Eine weitere vorteilhafte Weiterbildung besteht darin, dass am Dämpferrohr ein im Querschnitt U-förmiger und zum Abrollkolben geöffneter Tragring befestigt ist, dessen Außenschenkel das Ende des Abrollkolbens umgreift und der Lagerrollbalg zwischen dem Außenschenkel des Tragringes und dem Abrollkolben befestigt ist. Hierdurch ist die Herstellung vereinfacht und es werden einfach zu fertigende Zubehörteile verwendet.

Eine weitere vorteilhafte Weiterbildung im Sinne der Integration von Bauteilen besteht darin, dass der Außenschenkel des Tragringes einen Außenführungsring für den Lagerrollbalg aufweist.

Eine weitere vorteilhafte Weiterbildung besteht darin, dass das axiale Elastomerlager am Innenschenkel des U-förmigen und zum Abrollkolben geöffneten Tragringes ausgebildet ist und das Ende des Abrollkolbens mit dem Elastomerlager verbunden ist. Dies erzeugt ebenfalls eine möglichst kompakte Bauweise.

Durch die erfindungsgemäße Luftfedereinheit kann insgesamt der komfortmindernde Harshness-Effekt der Luftfederung halbiert werden. Eine solche Reduktion des HarshnessEffektes war in solcher Größenordnung bisher nicht möglich.

Die Minderung des Harshnesseffektes bringt eine signifikante Verbesserung des Komfortverhaltens in axialer Richtung, d.h. in Einfederrichtung. Durch die erfindungsgemäße Anordnung eines Lagerrollbalg entsteht des weiteren ein sehr weiches Lager für die kardanische Bewegung des Luftfederkolbens gegenüber dem Dämpferrohr.

Damit führen kardanische Auslenkungen des Federbeins zufolge kinematischer oder elastokinematischer Effekte quer zur Achse der Luftfedereinheit zu einer verschwindend kleinen radialen Verspannung des Luftfedereinheit. Der Lagerrollbalg erreicht also zusätzlich eine signifikant bessere Entkopplung von unvermeidlichen Querbewegungen, was den Komfort im Fahrbetrieb ebenfalls stark verbessert.

Durch die fehlende Verspannung des Luftfederbalges baut dieser keine signifikanten Querkräfte auf den Dämpfer auf. Das führt zu einer Minimierung der Klemmkräfte des Hydraulikdämpfers in seinem Dichtungspaket und am Dämpferkolben. Durch diese minimierten Klemmkräfte entstehen also am Dämpfer nur sehr viel kleinere Reibungskraftstöße beim Ein- und Ausfederbeginn (Umkehrpunkte der Federbewegung in beiden Richtungen). Dieser Effekt erzielt also eine signifikante Komfortverbesserung auf indirekte Art und Weise, da durch geringere Reibbelastungen im Dämpfer (Querrichtung) ein besseres Einfederverhalten (Axialrichtung) erzielt wird.

Anhand eines Ausführungsbeispieles soll die Erfindung näher erläutert werden. Es zeigen
- Fig. 1: eine erfindungsgemäße Luftfedereinheit in Form einer Prinzipskizze
- Fig. 2: eine weitere Ausführung der erfindungsgemäße Luftfedereinheit mit einem zusätzlichen Elastomerlager in Form einer Prinzipskizze

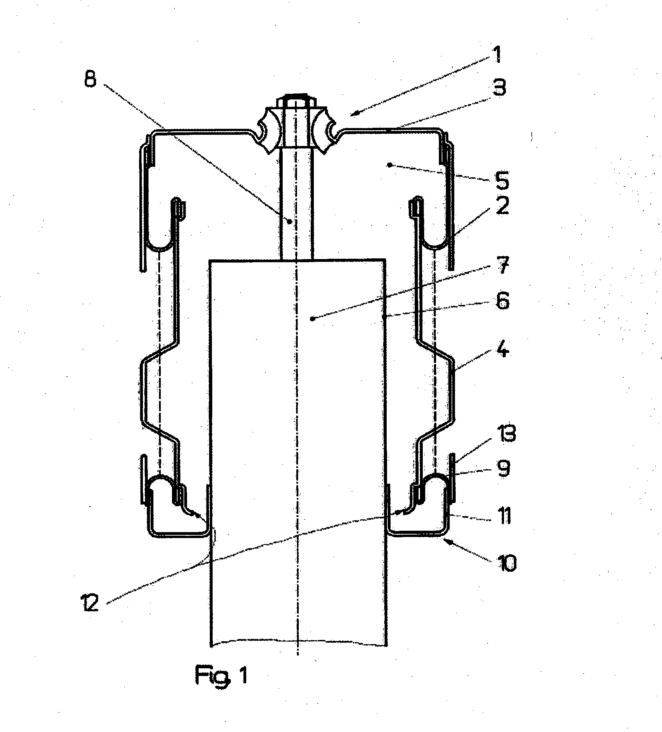

Die Fig. 1 zeigt eine erfindungsgemäße Luftfedereinheit 1 zwischen Karosserie und Fahrwerk eines hier nicht näher dargestellten Fahrzeuges, mit einen Luftfederrollbalg 2, der einerseits an einem Luftfederdeckel 3 und andererseits an einem in seiner äußeren Abrollkontur als rotationssymmetrischer Körper ausgebildeten Abrollkolben 4 befestigt ist. Der Luftfederrollbalg 2 , der Luftfederdeckel 3 und der Abrollkolben 4 umschließen einen mit Druckluft gefüllten Arbeitsraum 5.

Die Luftfedereinheit 1 beinhaltet einen zentrisch angeordneten teleskopierbaren Dämpfer 6, wobei der Dämpfer aus einem als Dämpfergehäuse ausgebildeten Dämpferrohr 7, einem innenliegenden hier nicht näher dargestellten Dämpfungskolben und einer einerseits am Dämpfungskolben und anderseits am Luftfederdeckel 3 angebundenen Kolbenstange 8 besteht.

Der Abrollkolben 4 ist über einen Lagerrollbalg 9 mit dem Dämpferrohr 7 verbunden, wobei der Lagerrollbalg 9 mit dem Arbeitsraum 5 in Verbindung steht. Der Lagerrollbalg 9 ist spiegelbildlich zum Luftfederrollbalg 2 und mit zum Luftfederrollbalg 2 entgegengesetzter Tragwirkung ausgebildet. Die Abrollbewegung des Lagerrollbalges ist der Abrollbewegung des Luftfederrollbalges kinematisch entgegengesetzt.

Am Dämpferrohr 7 der Luftfedereinheit 1 ist ein im Querschnitt U-förmiger und zum Abrollkolben geöffneter Tragring 10 befestigt ist, dessen Außenschenkel 11 das Ende 12 des Abrollkolbens 4 umgreift. Der Lagerrollbalg 9 ist zwischen dem Außenschenkel 11 des Tragringes 10 und dem Ende 12 des Abrollkolbens befestigt. Der Außenschenkel 11 des Tragringes 10 weist zudem einen Außenführungsring 13 für den Lagerrollbalg 9 auf. Der als konturierte Führung ausgebildete Außenführungsring 13 ist so ausgebildet, dass bei Relativbewegungen zwischen Abrollkolben 4 und Dämpferrohr 7 eine radiale, d.h. vertikale Zentrierung des Abrollkolbens 4 am Dämpferrohr 7 erfolgt.

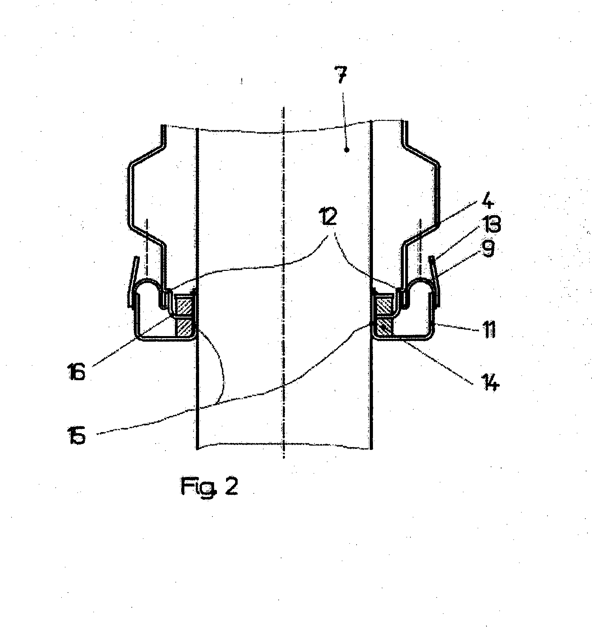

Fig. 2 zeigt den unteren Teil einer weiteren Ausführung der erfindungsgemäßen Luftfedereinheit mit einem zusätzlichen Elastomerlager 14 aus relativ weichem Elastomer, das zur axialen Fixierung zwischen Abrollkolben 4 und Dämpferrohr 7 vorgesehen ist. Das Elastomerlager 14 ist am Innenschenkel 15 des U-förmigen und zum Abrollkolben 4 geöffneten Tragringes 10 ausgebildet und das Ende 12 des Abrollkolbens 4 ist mit dem Elastomerlager 14 über eine in das Lager eingreifende Einschnürung/einen Rücksprung 16 verbunden.

### Bezugszeichenliste

### (Teil der Beschreibung)

- **1.**: Luftfedereinheit
- **2.**: Luftfederrollbalg
- **3.**: Luftfederdeckel
- **4.**: Abrollkolben
- **5.**: Arbeitsraum
- **6.**: Dämpfer
- **7.**: Dämpferrohr
- **8.**: Kolbenstange
- **9.**: Lagerrollbalg
- **10.**: Tragring
- **11.**: Außenschenkel des Tragrings
- **12.**: Ende des Abrollkolbens
- **13.**: Außenführungsring
- **14.**: Elastomerlager
- **15.**: Innenschenkel des Tragrings
- **16.**: Rücksprung

## Patentansprüche

1. Luftfedereinheit (1) zwischen Karosserie und Fahrwerk eines Fahrzeuges, wobei die Luftfedereinheit folgende Einrichtungen aufweist:
- einen Luftfederrollbalg (2), der einerseits an einem Luftfederdeckel (3) und andererseits an einem Abrollkolben (4) befestigt ist, wobei der Luftfederrollbalg (2), der Luftfederdeckel (3) und der Abrollkolben (4) einen mit Druckluft gefüllten Arbeitsraum (5) umschließen,
- einem zentrisch angeordneten teleskopierbaren Dämpfer (6), wobei der Dämpfer aus einem als Dämpfergehäuse ausgebildeten Dämpferrohr (7), einem innenliegenden Dämpfungskolben und einer einerseits am Dämpfungskolben und anderseits am Luftfederdeckel (3) angebundenen Kolbenstange (8) bestehe,
wobei der Abrollkolben (4) über ein Lager mit dem Dämpferrohr (7) verbunden ist, wobei das Lager als ein mit dem Arbeitsraum (5) in Verbindung stehender, spiegelbildlich zum Luftfederrollbalg (2) angeordneter Lagerrollbalg (9) ausgebildet ist,
**dadurch gekennzeichnet, dass** der Lagerrollbalg (9) mit zum Luftfederrollbalg (2) entgegengesetzter Tragwükung ausgebildet ist und dessen Abrollbewegung der Abrollbewegung des Luftfederrollbalges (2) kinematisch entgegengesetzt ist.

2. Luftfedereinheit nach Anspruch 1, bei dem der Lagerrotibalg (9) den gleichen wirksamen Durchmesser wie der Luftfederrollbalg (4) aufweist.

3. Luftfedereinheit nach Anspruch 1 oder 2, bei dem auf der Innen- oder Außenseite des Lagerrollbalges (9) konturierte Führungen (13) als Abrollzylinder vorgesehen sind.

4. Luftfedereinheit nach Anspruch 3, bei dem die konturierten Führungen (13) so ausgebildet sind, dass bei Relativbewegungen zwischen Abrollkolben (4) und Dämpferrohr (7) eine radiale Zentrierung des Abrollkolbens (4) am Dämpferrohr (7) erfolgt.

5. Luftfedereinheit nach einem der Ansprüche 1 bis 4, bei dem zur axialen Fixierung ein zusätzliches axiales Elastomerlager (14) zwischen Abrollkolben (4) und Dämpferrohr (7) vorgesehen ist.

6. Luftfedereinheit nach Anspruch 5, bei dem das axiale Elastomerlager (14) mit einem solchen Lagerspiel versehen ist, dass erst beim Überschreiten des Lagerspiels zwischen Abrollkolben (4) und Dämpferrohr (7) eine Lagerwirkung einsetzt.

7. Luftfedereinheit nach einem der Ansprüche 1 bis 5, bei dem der Lagerrollbalg (9) als kurzer und im Wesentlichen seine Rollfalte bereitstellender Rollbalg ausgebildet ist.

8. Luftfedereinheit nach einem der Ansprüche 1 bis 7, bei dem am Dampferrohr (7) ein im Querschnitt U-förmiger und zum Abrollkolben (4) geöffneter Tragring (10) befestigt ist, dessen Außenschenkel (11) das Ende (12) des Abrollkolbens (4) umgreift und der Lagerrollbalg (9) zwischen dem Außenschenkel (11) des Tragringes und dem Abrollkolben (4) befestigt ist.

9. Luftfedereinheit nach Anspruch 8, bei dem der Außenschenkel (11) des Tragringes einen Außenführungsring (13) für den Lagerrollbalg aufweist.

10. Luftfedereinheit nach einem der Ansprüche 8 oder 9, bei dem das axiale Elastomerlager (14) am Innenschenkel (15) des U-förmigen und zum Abrollkolben (4) geöffneten Tragringes (10) ausgebildet ist und das Ende (12) des Abrollkölbens mit dem Elastomerlager (14) verbunden ist.

## Claims

1. Air spring unit (1) between the body and chassis of a vehicle, the air spring unit having the following devices:
- an air spring rolling bellows (2) which is fastened on one side to an air spring cover (3) and on the other side to a rolling piston (4), the air spring rolling bellows (2), the air spring cover (3) and the rolling piston (4) enclosing a working space (5) which is filled with compressed air,
- a centrally arranged telescopic damper (6), the damper consisting of a damper tube (7) which is configured as a damper housing, a damping piston which lies on the inside, and a piston rod (8) which is attached on one side to the damping piston and on the other side to the air spring cover (3),
the rolling piston (4) being connected via a bearing to the damper tube (7), the bearing being configured as a bearing rolling bellows (9) which is connected to the working space (5) and is arranged mirror-symmetrically with respect to the air spring rolling bellows (2), **characterized in that** the bearing rolling bellows (9) is configured with a supporting action which is opposed to the air spring rolling bellows (2) and the rolling movement of which is opposed kinematically to the rolling movement of the air spring rolling bellows (2).

2. Air spring unit according to Claim 1, in which the bearing rolling bellows (9) has the same effective diameter as the air spring rolling bellows (4).

3. Air spring unit according to Claim 1 or 2, in which guides (13) which are contoured on the inner side or outer side of the bearing rolling bellows (9) are provided as rolling cylinders.

4. Air spring unit according to Claim 3, in which the contoured guides (13) are configured in such a way that radial centring of the rolling piston (4) on the damper tube (7) takes place in the case of relative movements between the rolling piston (4) and the damper tube (7).

5. Air spring unit according to one of Claims 1 to 4, in which an additional axial elastomeric bearing (14) is provided between the rolling piston (4) and the damper tube (7) for axial fixing.

6. Air spring unit according to Claim 5, in which the axial elastomeric bearing (14) is provided with a bearing play which is such that a bearing action starts only when the bearing play between the rolling piston (4) and the damper tube (7) is exceeded.

7. Air spring unit according to one of Claims 1 to 5, in which the bearing rolling bellows (9) is configured as a rolling bellows which is short and substantially provides its rolling folds.

8. Air spring unit according to one of Claims 1 to 7, in which a supporting ring (10) which is of U-shaped cross section and is open towards the rolling piston (4) is fastened to the damper tube (7), the outer limb (11) of which supporting ring (10) engages around the end (12) of the rolling piston (4), and the bearing rolling bellows (9) is fastened between the outer limb (11) of the supporting ring and the rolling piston (4).

9. Air spring unit according to Claim 8, in which the outer limb (11) of the supporting ring has an outer guide ring (13) for the bearing rolling bellows.

10. Air spring unit according to either of Claims 8 and 9, in which the axial elastomeric bearing (14) is configured on the inner limb (15) of the supporting ring (10) which is U-shaped and is open towards the rolling piston (4), and the end (12) of the rolling piston is connected to the elastomeric bearing (14).

## Revendications

1. Suspension pneumatique (1) entre une carrosserie et un châssis de roulement d'un véhicule, la suspension pneumatique présentant les composants suivants :
- un soufflet roulant de ressort pneumatique (2), qui est fixé d'une part à une coiffe de ressort pneumatique (3) et d'autre part à un piston déroulant (4), le soufflet roulant de ressort pneumatique (2), la coiffe de ressort pneumatique (3) et le piston déroulant (4) entourant un espace de travail (5) rempli d'air comprimé,
- un amortisseur (6) télescopable disposé centralement, l'amortisseur se composant d'un tube d'amortisseur (7) réalisé sous forme de boîtier d'amortisseur, d'un piston d'amortissement situé à l'intérieur et d'une tige de piston (8) reliée d'une part au piston d'amortissement et d'autre part à la coiffe de ressort pneumatique (3),
le piston déroulant (4) étant connecté par le biais d'un palier au tube d'amortisseur (7), le palier étant réalisé sous forme de soufflet roulant de palier (9) en liaison avec l'espace de travail (5), disposé avec une symétrie spéculaire par rapport au soufflet roulant de ressort pneumatique (2),
**caractérisée en ce que** le soufflet roulant de palier (9) est réalisé avec un effet de support opposé au soufflet roulant de ressort pneumatique (2) et son mouvement de déroulement est opposé sur le plan cinématique au mouvement de déroulement du soufflet roulant de ressort pneumatique (2).

2. Suspension pneumatique selon la revendication 1, dans laquelle le soufflet roulant de palier (9) présente le même diamètre efficace que le soufflet roulant de ressort pneumatique (4).

3. Suspension pneumatique selon la revendication 1 ou 2, dans laquelle des guides profilés (13) sous forme de cylindres de déroulement sont prévus sur le côté intérieur ou le côté extérieur du soufflet roulant de palier (9).

4. Suspension pneumatique selon la revendication 3, dans laquelle les guides profilés (13) sont réalisés de telle sorte que dans le cas de mouvements relatifs entre le piston déroulant (4) et le tube d'amortisseur (7), il se produise un centrage radial du piston déroulant (4) sur le tube d'amortisseur (7).

5. Suspension pneumatique selon l'une quelconque des revendications 1 à 4, dans laquelle une couche élastomère axiale supplémentaire (14) est prévue entre le piston déroulant (4) et le tube d'amortisseur (7) en vue d'une fixation axiale.

6. Suspension pneumatique selon la revendication 5, dans laquelle la couche élastomère axiale (14) est pourvue d'un jeu de palier tel qu'un effet de palier ne s'établisse que dans le cas d'un dépassement du jeu de palier entre le piston déroulant (4) et le tube d'amortisseur (7).

7. Suspension pneumatique selon l'une quelconque des revendications 1 à 5, dans laquelle le soufflet roulant de palier (9) est réalisé sous forme de soufflet roulant court et fournissant sensiblement ses plis de roulement.

8. Suspension pneumatique selon l'une quelconque des revendications 1 à 7, dans laquelle une bague de support (10) de section transversale en forme de U et ouverte vers le piston déroulant (4) est fixée sur le tube d'amortisseur (7), la branche extérieure (11) de ladite bague de support venant en prise autour de l'extrémité (12) du piston déroulant (4), et le soufflet roulant de palier (9) est fixé entre la branche extérieure (11) de la bague de support et le piston déroulant (4).

9. Suspension pneumatique selon la revendication 8, dans laquelle la branche extérieure (11) de la bague de support présente une bague de guidage extérieur (13) pour le soufflet roulant de palier.

10. Suspension pneumatique selon l'une quelconque des revendications 8 ou 9, dans laquelle la couche élastomère axiale (14) est réalisée sur la branche intérieure (15) de la bague de support (10) en forme de U et ouverte vers le piston déroulant (4) et l'extrémité (12) du piston déroulant est connectée à la couche élastomère (14).
